# FASCICULE DE BREVET EUROPEEN

(11) **EP 0 934 908 B1**
(45) Date de publication et mention de la délivrance du brevet: **02.04.2003**
(21) Numéro de dépôt: 98403310.0
(22) Date de dépôt: 28.12.1998
(51) Int. Cl.: C03B 9/31, C03B 9/32

(54) **Procédé de fabrication d'un récipient en verre et récipient obtenu selon le procédé**
Verfahren zum Herstellen eines Glascontainers und Container hergestellt durch dieses Verfahren
Method for making a glass container and container produced by this method

(30) Priorité: 09.02.1998 FR 9801496
(43) Date de publication de la demande: 11.08.1999
(73) Titulaire: L'OREAL, 75008 Paris (FR)
(72) Inventeur: Monchatre, Ghislaine, 75020 Paris (FR)
(74) Mandataire: Boulard, Denis

(56) Documents cités:
- DE-A- 1 596 463
- DE-A- 2 459 469
- FR-A- 1 058 684
- FR-A- 2 134 337
- FR-A- 2 134 338
- US-A- 1 715 130

## Description

La présente invention a trait à un nouveau procédé de moulage d'un récipient en verre. De tels récipients sont particulièrement adaptés pour le conditionnement de produits cosmétiques, notamment des parfums.

Les récipients en verre sont généralement réalisés par soufflage ou pressage d'une ébauche dans un moule ébaucheur, puis par soufflage de l'ébauche dans un moule finisseur aux dimensions et forme du récipient à obtenir. Dans le domaine de la cosmétique, en particulier les parfums, on est constamment à la recherche de nouvelles esthétiques, toujours plus attractives pour le consommateur, et/ou qui soient représentatives de telle ou telle nouvelle caractéristique du parfum, notamment d'une senteur particulière. Ces dernières années ont été marquées par l'apparition d'une multitude de nouvelles formes, couleurs, ou concepts pour le conditionnement des parfums. Certains de ces nouveaux concepts se sont révélés parfois non satisfaisants, ou trop coûteux à mettre en oeuvre.

Aussi, est-ce un des objets de l'invention que de fournir un nouveau procédé, économiquement viable, pour la réalisation d'un récipient en verre, remarquable en ce qu'il comporte à l'intérieur de la paroi qui le compose, une multitude d'inclusions d'air, emprisonnées dans la matière, et disposées de manière prédéterminée.

C'est un autre objet de l'invention que de produire un récipient présentant un aspect visuel particulièrement original, parfaitement reproductible, et pouvant être obtenu par un procédé totalement automatisable.

D'autres objets de l'invention apparaîtront de manière plus précise dans la description détaillée qui suit.

Selon l'invention, ces objets sont atteints en réalisant un procédé pour la réalisation d'un récipient en verre consistant à réaliser le moulage en deux étapes successives : une première étape dans un moule ébaucheur comportant des broches faisant saillie à l'intérieur du moule, sur une longueur inférieure à l'épaisseur des parois de l'ébauche, les parois externes de l'ébauche présentant après démoulage, des portions en creux correspondant à la présence des broches faisant saillie, et une seconde étape dans un moule finisseur à parois lisses, à la forme et aux dimensions du récipient à obtenir, la pression de soufflage à l'intérieur du moule finisseur étant contrôlée de manière à permettre un lissage de la paroi extérieure du récipient et la formation d'inclusions d'air dans la paroi du récipient. Dans le moule ébaucheur, la matière peut être plaquée contre les parois du moule, soit par soufflage, soit par pressage au moyen d'un poinçon.

On obtient ainsi un récipient, présentant une esthétique particulièrement originale, pouvant être obtenue de manière parfaitement reproductible, par un procédé pouvant être entièrement automatisé.

Avantageusement, les broches du moule ébaucheur sont aptes à passer d'une première position, dans laquelle elles ne font sensiblement pas saillie par rapport aux parois internes du moule à une seconde position dans laquelle, elles font saillie par rapport aux parois internes du moule, sur une longueur inférieure à l'épaisseur des parois de l'ébauche, de manière à ne pas traverser. Le fait que les broches soient rétractables facilite de manière considérable le démoulage de l'ébauche. On évite en particulier, dans le cas d'un processus totalement automatisé que le verre soit endommagé ou rayé.

A titre d'exemple, les broches sont commandées par un système pneumatique. De préférence, toutes les broches sont actionnées de manière simultanée par le même système pneumatique. De telles broches commandées par un système pneumatique sont bien connues dans le domaine du moulage des matériaux thermoplastiques, notamment lorsqu'il s'agit de faire un orifice débouchant dans une pièce moulée.

Les broches peuvent être de section, circulaire, triangulaire, carrée, ovale, ou en forme d'étoile. D'autres formes encore peuvent être envisagées, en fonction de ce que sont sensées évoquer les inclusions d'air, notamment pour le consommateur, ou de la caractéristique du produit qu'elles sont sensées souligner.

Avantageusement, les moules ébaucheur et finisseur sont constitués d'au moins deux portions de coques aptes à se refermer au niveau d'au moins deux lignes parallèles à l'axe longitudinal du récipient. Dans le cas d'un moule ébaucheur à broches non rétractables, on dispose les broches par rapport aux lignes d'ouverture de moule, de sorte que les broches ne gênent pas le démoulage. En outre, dans ce cas de figure, la paraison est descendue dans le moule avant fermeture de ce dernier, de manière à ne pas rayer le verre.

Le verre peut être du verre blanc ou coloré.

Selon une variante au procédé selon la présente invention, avant d'être introduite dans le moule finisseur l'ébauche est réchauffée, de manière à en faciliter le moulage dans le moule finisseur, l'objectif étant de remettre l'ébauche à une température telle que la matière puisse être soufflée et moulée correctement dans le moule finisseur.

Selon une autre variante, le procédé selon l'invention comprend en outre une étape selon laquelle, avant d'être introduite dans le moule finisseur, l'ébauche est trempée dans un bain de verre en fusion de manière à enrober la surface extérieure de l'ébauche d'une fine couche de verre, ladite fine couche de verre ne modifiant pas de manière sensible le profil de la paroi extérieure de l'ébauche.

Selon une autre variante encore, le récipient issu du moule finisseur est trempé dans un bain de verre en fusion et soufflé à nouveau dans un moule auxiliaire, la pression de soufflage étant contrôlée de manière à ne pas provoquer l'éclatement des inclusions d'air. On peut ainsi améliorer l'état de surface du récipient final.

Selon un autre aspect de l'invention, on réalise également un récipient en verre obtenu avec le procédé selon l'invention.

Avantageusement, les inclusions d'air présentent des dimensions variables, en fonction du rapport des dimensions entre le moule ébaucheur et le moule finisseur. En effet, quand on utilise un moule finisseur de hauteur relativement importante pour souffler une ébauche obtenue dans un moule de plus faible hauteur, la matière est soumise à des étirements qui ne sont pas identiques dans tous les endroits du moule. Ainsi, en raison notamment de l'épaisseur plus importante de l'ébauche au niveau de son fond, la matière située à l'opposé de la canne de soufflage sera étirée de manière moins importante que celle située au voisinage de la canne de soufflage. Les bulles seront donc de hauteur décroissante en direction du fond du récipient.

Par exemple, le récipient selon l'invention est du type comportant un corps, surmonté d'un goulot, et obturé par un fond, les inclusions d'air étant de hauteur continûment croissante en direction du goulot. Dans ce mode de réalisation, le soufflage du récipient se fait depuis le col ouvert de celui-ci, ce qui entraîne un étirement de la matière et des inclusions d'air, de plus en plus important au fur et à mesure que l'on se rapproche du goulot.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- les figures 1A-1I illustrent de façon schématique les différentes étapes d'un mode de réalisation préférentiel du procédé selon l'invention;
- les figures 2A-2B représentent une vue en coupe de portions de paroi d'un récipient obtenu par le procédé selon l'invention; et
- la figure 3 illustre un mode de réalisation d'un récipient selon l'invention.

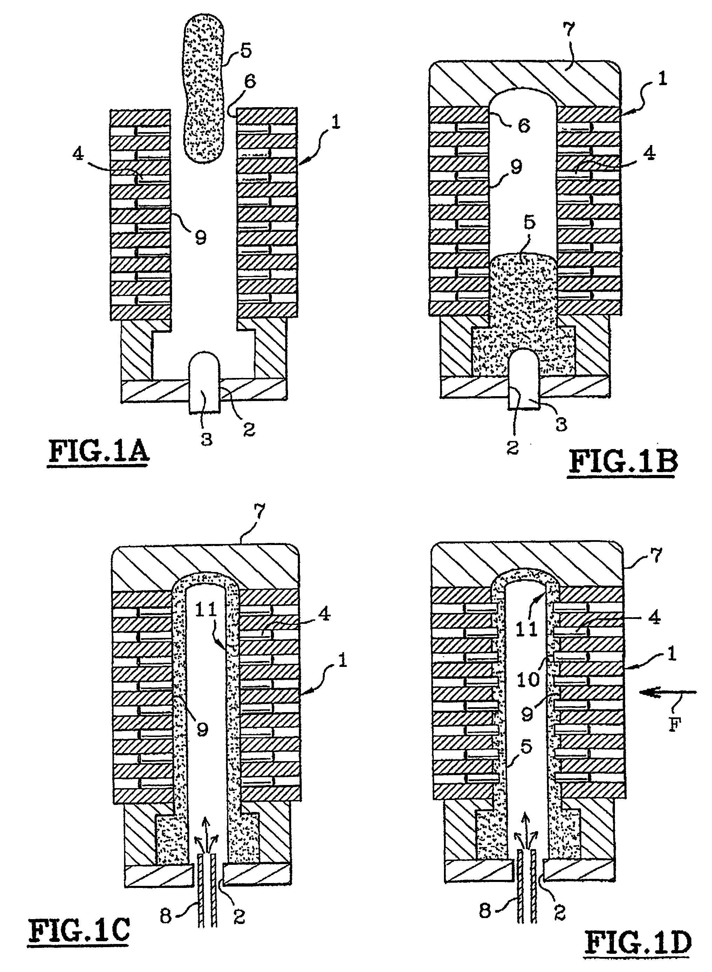

A la figure 1A, une paraison en verre 5 à l'état relativement visqueux, est introduite dans un moule ébaucheur 1 formé de deux demi coques, aptes à se refermer autour d'un plan de joint passant par l'axe du flacon. Typiquement, le verre est à température pouvant varier entre 700 °C et 1050 °C. Dans cette gamme de température, la viscosité du verre est comprise typiquement entre 1000 poises et 10 000 000 poises. Le fond du moule 1 comporte un orifice 2 obturé de façon amovible par un dispositif d'obturation 3. La matière est introduite dans le moule 1 par une ouverture 6, située à l'opposé de l'ouverture 2. Cette ouverture 6 est ensuite fermée, avant soufflage, par un fond amovible 7. Le moule 1 comporte sur sensiblement toute la surface de ses parois latérales, des broches 4, régulièrement disposées, et commandées par un système pneumatique (non représenté) pour, sélectivement, passer d'une position rétractée (figure 1A) dans laquelle leurs extrémités libres 10 ne font sensiblement pas saillie par rapport à la surface intérieure 9 du moule, à une position avancée (figure 1D) dans laquelle leurs extrémités libres 10 font saillie par rapport à la surface intérieure 9 du moule.

A la figure 1B, la masse de verre 5 à l'état pâteux est déposée au fond du moule ébaucheur 1. L'ouverture 6 est obturée par un fond rapporté 7.

A la figure 1C, le dispositif d'obturation 3 est enlevé de manière à dégager l'orifice 2, et à pouvoir y introduire une canne de soufflage 8. A ce moment, on souffle à l'intérieur du moule ébaucheur 1. Typiquement, la pression de soufflage est de l'ordre de 1 à 2 bars. Sous l'effet de la pression de soufflage, le verre 5 se plaque contre les parois intérieures 9 du moule ébaucheur 1, épousant complètement le profil de ce dernier, et formant ce que l'on désignera par la suite, sous le terme "ébauche" 11. Pour des raisons de simplification, l'ébauche 11 a été représentée volontairement avec des parois d'épaisseur constante. Dans la pratique, les épaisseurs de la paroi ne sont pas identiques partout, l'épaisseur du fond, notamment, étant généralement plus importante que celle du reste de l'ébauche.

A la figure 1D, les broches sont déplacées selon un mouvement perpendiculaire à l'axe du moule, illustré par la flèche F, de manière à ce que leurs extrémités libres 10 pénètrent dans la matière 5 constituant l'ébauche 11, sur environ 2/3 de l'épaisseur de la paroi de l'ébauche. Pendant cette opération, la pression de soufflage est maintenue à l'intérieur du moule. De manière plus générale, le rapport entre l'épaisseur des parois latérales de l'ébauche, et la profondeur de pénétration des broches dans la matière est compris avantageusement entre 1,3 et 2, et de préférence, entre 1,5 et 2.

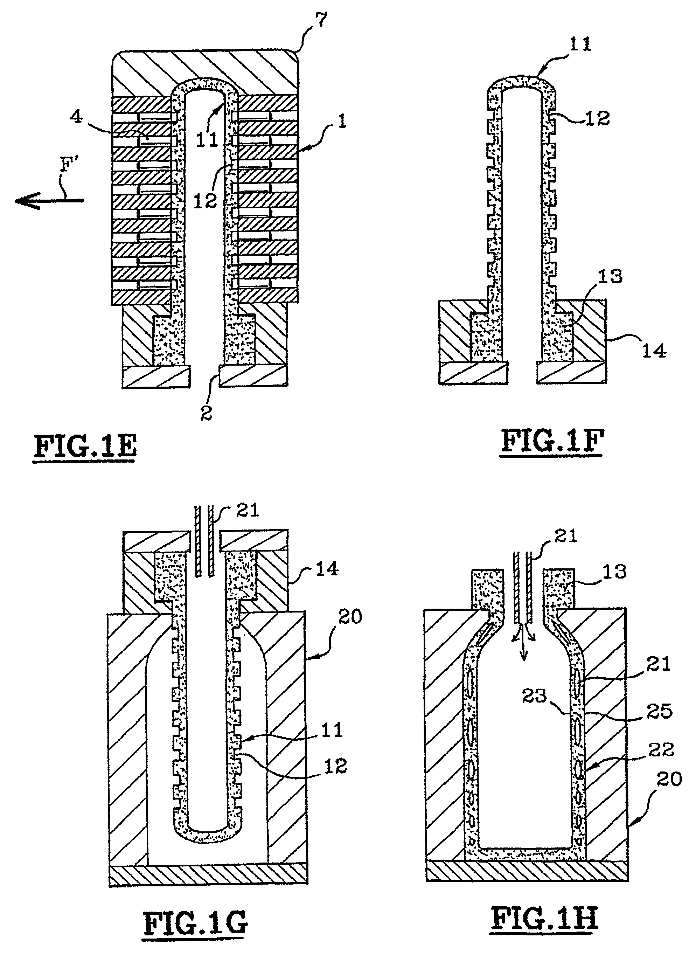

A la figure 1E, la pression de soufflage est interrompue, et l'on fait reculer les broches 4, par un mouvement dont la direction est illustrée par la flèche F', de sorte qu'elles soient entièrement rentrées à l'intérieur des parois du moule 1.

A la figure 1F, l'ébauche 11 est démoulée. Celle-ci reste toutefois maintenue par une partie 14 du moule, à l'intérieur de laquelle est formé le col 13 du récipient à venir. Comme il apparaît clairement, la surface extérieure de l'ébauche 11 présente des portions en creux 12, aux endroits où les broches 4 ont été introduites.

A la figure 1G, l'ébauche 11 ainsi maintenue par la portion 14, est introduite dans le moule finisseur 20, à parois lisses, et dont les dimensions et la forme sont conformes aux dimensions et à la forme du récipient à obtenir. Avantageusement, il peut être nécessaire avant d'introduire l'ébauche 11 dans le moule 20, de la remettre à température de moulage appropriée, en la faisant passer dans un dispositif de chauffage. Il est également possible, avant d'introduire l'ébauche 11 dans le moule finisseur 20, de la tremper dans un bain de verre liquide (maintenu à température supérieure à 1600 °C), de manière à l'enrober d'une fine couche de verre, sans pour autant modifier de façon substantielle le profil de l'ébauche, telle que sortant du moule ébaucheur 1.

Une fois l'ébauche 11 disposée dans le moule finisseur 20, on souffle le verre à l'état ramolli, à l'aide d'une canne de soufflage 21, ce qui entraîne le plaquage des parois de l'ébauche 11 contre la surface intérieure du moule 20 (figure 1H). Ce faisant, l'air contenu dans les creux 12 de l'ébauche 11 se trouve emprisonné dans la paroi 23 du récipient 22, sous forme d'inclusions 21. En effet, les creux 12 se rebouchent sous l'effet de la pression de soufflage s'exerçant sur la matière, cette dernière étant en appui sur la surface lisse du moule finisseur 20. Les parois extérieures 25 du récipient 22 sont sensiblement lisses. Lors de cette phase de soufflage dans le moule finisseur 20, la pression de soufflage ne doit pas être trop forte de manière à ne pas provoquer un éclatement des inclusions d'air 21, ni à l'intérieur ni à l'extérieur du récipient 22. Elle doit être toutefois suffisante pour permettre le lissage de la surface extérieure 25 du récipient.

En outre, en raison du soufflage dans un moule de dimensions qui, généralement, sont supérieures à la dimension du moule ébaucheur 1, les inclusions d'air s'étirent dans le sens longitudinal et latéral, proportionnellement à la variation de dimensions existant entre les côtes intérieures du moule ébaucheur 1, et celles du moule finisseur 20. On peut jouer sur ces variations de dimensions entre le moule ébaucheur et le moule finisseur pour produire des effets très variés, quant à la forme et à la disposition des inclusions d'air dans le récipient final 22.

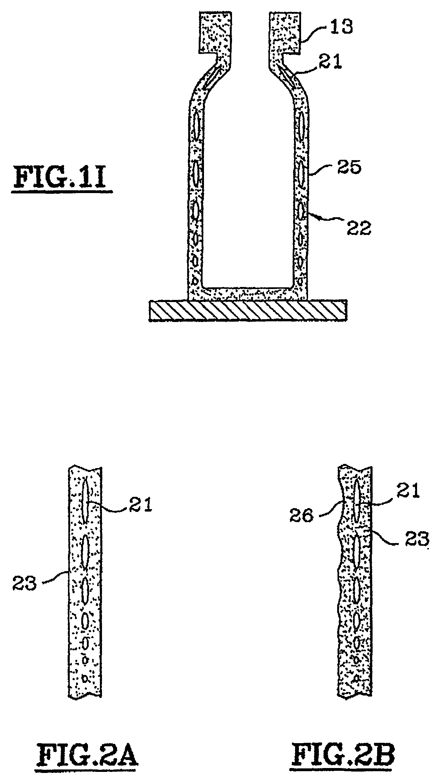

En fonction de la pression de soufflage, et de la taille des inclusions d'air formées dans la paroi du récipient, la surface intérieure du récipient 22 pourra être sensiblement lisse (voir vue de détail de la figure 2A) ou former des zones en creux 26, en regard des inclusions d'air 21 (voir vue de détail de la figure 2B), lesquelles zones en creux 26 sont dues à la résistance plus faible offerte par la paroi 23 aux endroits où sont situés les inclusions d'air 21. Les figures 2A et 2B illustrent également les variations dimensionnelles des inclusions d'air 21, notamment longitudinalement, dues à l'étirement de matière évoqué précédemment. Comme il apparaît clairement à la figure 2B, les zones en creux 26 formées par la paroi 23 sont de profondeur décroissante avec la taille des inclusions d'air 21.

Dans l'étape de la figure 1I, le récipient 22 est démoulé, puis recuit à une température comprise entre 550 °C et 560 °C. Après recuisson, le récipient 22 est ensuite refroidi de manière progressive.

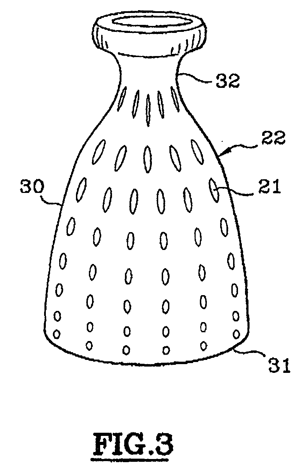

La figure 3 représente un mode de réalisation d'un récipient 22 obtenu avec le procédé tel que décrit ci-avant, avec toutefois un moule finisseur de forme sensiblement différente de celle du moule finisseur représenté aux figures 1G et 1H. Ce récipient se présente sous forme d'un flacon comprenant un corps 30 fermé par un fond 31, et dont l'extrémité opposée au fond se termine par un goulot ouvert 32. Comme expliqué précédemment, le flacon comporte dans sa paroi, des inclusions d'air 21 réparties de manière prédéterminée, et dont la hauteur augmente progressivement dans la direction du goulot 32. Pour ce flacon particulier, le soufflage a été réalisé au travers du goulot 32.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

## Revendications

1. Procédé pour la réalisation d'un récipient en verre (22), consistant à réaliser le moulage en deux étapes successives, une première étape dans un moule ébaucheur (1) comportant des broches (4) faisant saillie à l'intérieur du moule, sur une longueur inférieure à l'épaisseur des parois de l'ébauche (11), les parois externes de l'ébauche présentant après démoulage, des portions en creux (12) correspondant à la présence des broches (4) faisant saillie, et une seconde étape dans un moule finisseur à parois lisses (20), à la forme et aux dimensions du récipient à obtenir, la pression de soufflage à l'intérieur du moule finisseur étant contrôlée de manière à permettre un lissage de la paroi extérieure (25) du récipient (22) et la formation d'inclusions d'air (21) dans la paroi du récipient.

2. Procédé selon la revendication 1 **caractérisé en ce que** les broches (4) du moule ébaucheur (1) sont aptes à passer d'une première position dans laquelle elles ne font sensiblement pas saillie par rapport aux parois internes (9) du moule ébaucheur (1) à une seconde position dans laquelle elles font saillie par rapport aux parois internes (9) du moule (1), sur une longueur inférieure à l'épaisseur des parois latérales de l'ébauche (11).

3. Procédé selon la revendication 1 ou 2 **caractérisé en ce que** les broches (4) font saillie à l'intérieur du moule ébaucheur (1) sur une longueur telle que le rapport entre l'épaisseur des parois latérales de l'ébauche (11), et la profondeur de pénétration des broches (4) dans la matière est compris entre 1,3 et 2, et de préférence, entre 1,5 et 2.

4. Procédé selon la revendication 2 ou 3 **caractérisé en ce que** les broches (4) sont commandées par un système pneumatique.

5. Procédé selon l'une quelconque des revendications 1 à 4 **caractérisé en ce que** les broches (4) sont de section, circulaire, triangulaire, carrée, ovale, ou en forme d'étoile.

6. Procédé selon l'une quelconque des revendications 1 à 5 **caractérisé en ce que** les moules ébaucheur (1) et finisseur (20) sont constituées d'au moins deux portions de coques aptes à se refermer au niveau d'au moins deux lignes parallèles à l'axe longitudinal du récipient.

7. Procédé selon l'une quelconque des revendications 1 à 6 **caractérisé en ce que** le verre est du verre blanc ou coloré.

8. Procédé selon l'une quelconque des revendications 1 à 7 **caractérisé en ce que** avant d'être introduite dans le moule finisseur (20), l'ébauche (11) est chauffée, de manière à en faciliter le façonnage dans le moule finisseur (20).

9. Procédé selon l'une quelconque des revendications 1 à 8 **caractérisé en ce qu'**il comprend en outre une étape selon laquelle, avant d'être introduite dans le moule finisseur (20), l'ébauche (11) est trempée dans un bain de verre en fusion de manière à enrober la surface extérieure de l'ébauche (11) d'une fine couche de verre, ladite fine couche de verre ne modifiant pas de manière sensible le profil de la paroi extérieure de l'ébauche (11).

10. Procédé selon l'une quelconque des revendications 1 à 9 **caractérisé en ce que** le récipient (22) issu du moule finisseur (20) est trempé dans un bain de verre en fusion et soufflé à nouveau dans un moule auxiliaire, la pression de soufflage étant contrôlée de manière à ne pas provoquer l'éclatement des inclusions d'air.

11. Récipient en verre (22) obtenu avec le procédé selon l'une quelconque des revendications précédentes.

12. Récipient selon la revendication 11 **caractérisé en ce que** les inclusions d'air (21) présentent des dimensions variables, en fonction du rapport des dimensions entre le moule ébaucheur (1) et le moule finisseur (20).

13. Récipient selon la revendication 11 ou 12, du type comportant un corps surmonté d'un goulot, les inclusions d'air (21) étant de hauteur continûment croissante en direction du goulot.

## Claims

1. Method for the production of a glass container (22), consisting in moulding in two successive steps, a first step in a preform mould (1) having pins (4) that project into the mould, over a length of less than the thickness of the walls of the preform (11), the outer walls of the preform having, after demoulding, hollowed portions (12) corresponding to the presence of the projecting pins (4), and a second step in a smooth-walled finishing mould (20) having the shape and the dimensions of the container to be obtained, the blowing pressure inside the finishing mould being controlled so as to allow smoothing of the outer wall (25) of the container (22) and to form air inclusions (21) in the wall of the container.

2. Method according to Claim 1, **characterized in that** the pins (4) of the preform mould (1) are capable of passing from a first position in which they do not project substantially from the internal walls (9) of the preform mould (1) to a second position in which they project from the internal walls (9) of the mould (1) over a length smaller than the thickness of the side walls of the preform (11).

3. Method according to Claim 1 or 2, **characterized in that** the pins (4) project into the preform mould (1) over a length such that the ratio of the thickness of the side walls of the preform (11) to the depth of penetration of the pins (4) into the material is between 1.3 and 2, and preferably between 1.5 and 2.

4. Method according to Claim 2 or 3, **characterized in that** the pins (4) are controlled by a pneumatic system.

5. Method according to any one of Claims 1 to 4, **characterized in that** the pins (4) are of circular, triangular, square, oval or star-shaped cross section.

6. Method according to any one of Claims 1 to 5, **characterized in that** the preform mould (1) and the finishing mould (20) consist of at least two shell portions capable of being closed up along at least two lines parallel to the longitudinal axis of the container.

7. Method according to any one of Claims 1 to 6, **characterized in that** the glass is white or coloured glass.

8. Method according to any one of Claims 1 to 7, **characterized in that** the preform (11), before being introduced into the finishing mould (20), is heated so as to facilitate the shaping thereof in the finishing mould (20).

9. Method according to any one of Claims 1 to 8, **characterized in that** it furthermore includes a step in which the preform (11), before being introduced into the finishing mould (20), is dipped into a bath of molten glass so as to coat the outer surface of the preform (11) with a thin layer of glass, the said thin layer of glass not substantially modifying the profile of the outer wall of the preform (11).

10. Method according to any one of Claims 1 to 9, **characterized in that** the container (22) taken from the finishing mould (20) is dipped into a bath of molten glass and blown again, in an auxiliary mould, the blowing pressure being controlled so as not to cause the air inclusions to burst.

11. Glass container (22) obtained by the method according to any one of the preceding claims.

12. Container according to Claim 11, **characterized in that** the dimensions of the air inclusions (21) vary depending on the ratio of the dimensions of the preform mould (1) to those of the finishing mould (20).

13. Container according to Claim 11 or 12, of the type comprising a body surmounted by a neck, the air inclusions (21) continuously increasing in length towards the neck.

## Patentansprüche

1. Verfahren zur Herstellung eines Glasbehälters (22), das darin besteht, das Formen in zwei aufeinanderfolgenden Schritten durchzuführen, einem ersten Schritt in einer Vorform (1), die ins Innere der Form über eine Länge vorstehende Stifte (4) aufweist, die kürzer ist als die Stärke der Wände des Rohlings (11), wobei die Außenwände des Rohlings nach dem Entformen vertiefte Abschnitte (12) aufweisen, die dem Vorhandensein der vorstehenden Stifte (4) entsprechen, und einem zweiten Schritt in einer Fertigform (20) mit glatten Wänden und der Form und den Abmessungen des zu erhaltenden Behälters, wobei der Blasdruck innerhalb der Fertigform so gesteuert wird, daß er ein Glätten der Außenwand (25) des Behälters (22) und die Bildung von Lufteinschlüssen (21) in der Wand des Behälters ermöglicht.

2. Verfahren nach Anspruch 1, **dadurch gekennzeichnet, daß** die Stifte (4) der Vorform (1) in der Lage sind, von einer ersten Stellung, in der sie im wesentlichen nicht in bezug auf die Innenwände (9) der Vorform (1) vorstehen, in eine zweite Stellung überzugehen, in der sie in bezug auf die Innenwände (9) der Form (1) über eine Länge vorstehen, die geringer ist als die Stärke der Seitenwände des Rohlings (11).

3. Verfahren nach Anspruch 1 oder 2, **dadurch gekennzeichnet, daß** die Stifte (4) im Inneren der Vorform (1) über eine solche Länge vorstehen, daß das Verhältnis zwischen der Stärke der Seitenwände des Rohlings (11) und der Eindringtiefe der Stifte (4) in das Material zwischen 1,3 und 2, und vorzugsweise zwischen 1,5 und 2 liegt.

4. Verfahren nach Anspruch 2 oder 3, **dadurch gekennzeichnet, daß** die Stifte (4) von einem Druckluftsystem gesteuert werden.

5. Verfahren nach einem der Ansprüche 1 bis 4, **dadurch gekennzeichnet, daß** die Stifte (4) einen kreisförmigen, dreieckigen, quadratischen, ovalen oder sternförmigen Querschnitt haben.

6. Verfahren nach einem der Ansprüche 1 bis 5, **dadurch gekennzeichnet, daß** die Vorform (1) und die Fertigform (20) aus mindestens zwei Schalenteilen bestehen, die sich in Höhe mindestens zweier Linien parallel zur Längsachse des Behälters schließen können.

7. Verfahren nach einem der Ansprüche 1 bis 6, **dadurch gekennzeichnet, daß** das Glas weißes oder farbiges Glas ist.

8. Verfahren nach einem der Ansprüche 1 bis 7, **dadurch gekennzeichnet, daß** der Rohling (11) vor seinem Einführen in die Fertigform (20) erwärmt wird, um sein Formen in der Fertigform (20) zu erleichtern.

9. Verfahren nach einem der Ansprüche 1 bis 8, **dadurch gekennzeichnet, daß** es außerdem einen Schritt aufweist, in dem der Rohling (11) vor seinem Einführen in die Fertigform (20) in ein Bad aus schmelzflüssigem Glas getaucht wird, um die Außenfläche des Rohlings (11) mit einer dünnen Glasschicht zu überziehen, wobei die dünne Glasschicht das Profil der Außenwand des Rohlings (11) nicht wesentlich verändert.

10. Verfahren nach einem der Ansprüche 1 bis 9, **dadurch gekennzeichnet, daß** der aus der Fertigform (20) kommende Behälter (22) in ein Bad aus schmelzflüssigem Glas getaucht und erneut in einer Hilfsform geblasen wird, wobei der Blasdruck so gesteuert wird, daß er die Lufteinschlüsse nicht platzen läßt.

11. Glasbehälter (22), der mit dem Verfahren gemäß einem der vorhergehenden Ansprüche erhalten wird.

12. Behälter nach Anspruch 11, **dadurch gekennzeichnet, daß** die Lufteinschlüsse (21) in Abhängigkeit vom Verhältnis der Abmessungen der Vorform (1) und der Fertigform (20) variable Abmessungen aufweisen.

13. Behälter nach Anspruch 11 oder 12 von der Art mit einem Körper, auf dem ein Hals sitzt, wobei die Lufteinschlüsse (21) von einer in Richtung des Halses kontinuierlich zunehmenden Höhe sind.
